(19) Europäisches Patentamt
European Patent Office
Office européen des brevets

(11) Publication number: **0 085 834**

(12) **EUROPEAN PATENT SPECIFICATION**

(45) Date of publication of patent specification: **29.04.87**

(51) Int. Cl.$^4$: **C 08 K 5/00,** C 08 K 3/38, C 08 K 5/02, C 08 L 71/04

(21) Application number: **83100202.7**

(22) Date of filing: **12.01.83**

(54) **Colour inhibiting flame-retardant consisting of a stable halogenated organic compound and a boron compound.**

(30) Priority: **25.01.82 US 342355**

(43) Date of publication of application:
**17.08.83 Bulletin 83/33**

(45) Publication of the grant of the patent:
**29.04.87 Bulletin 87/18**

(84) Designated Contracting States:
**DE FR GB IT NL**

(56) References cited:
**EP-A-0 058 378**
**FR-A-2 119 631**
**FR-A-2 173 013**
**FR-A-2 223 340**
**US-A-3 897 387**
**US-A-3 919 356**
**US-A-4 144 288**

(73) Proprietor: **GENERAL ELECTRIC COMPANY**
**1 River Road**
**Schenectady New York 12305 (US)**

(72) Inventor: **Abolins, Visvaldis**
**15 Haddington Lane**
**Delmar, NY 12054 (US)**
Inventor: **Holub, Fred Frank**
**2263 Preisman Drive**
**Schenectady, NY 12305 (US)**

(74) Representative: **Schüler, Horst, Dr. et al**
**Kaiserstrasse 41**
**D-6000 Frankfurt/Main 1 (DE)**

**EP 0 085 834 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Statement of the invention

This invention relates to a novel flame retardant composition comprising a polyphenylene ether resin and a flame retardant system consisting of a combination of 1 to 3 parts of a boron containing ester and 10 to 25 parts of a brominated phenoxy alkane, which is stable at 250 to 300°C, in an amount of 10 to 25 parts per 100 parts of the composition. Such flame resistant polyphenylene ether resin compositions do not discolor on molding.

A preferred flame resistant polyphenylene ether resin composition comprises a blend made by incorporating an effective amount of the afore said flame retardant system into a composition comprising a poly(2,6-dialkyl-1,4-phenylene)ether resin, as for example, poly(2,6-dimethyl-1,4-phenylene)ether resin.

Background of the invention

The polyphenylene ethers are known and described in numerous publications including U.S. Patent Nos. 3,306,874 and 3,306,875 of Hay, and U.S. Patent No. 3,257,357 and 3,257,358 of Stamatoff. The high molecular weight polyphenylene ethers are high performance engineering thermoplastics possessing relatively high melt viscosities and softening points, that is, in excess of 250°C, and are useful for many commercial applications requiring high temperature resistance including formation of film, fiber and molded articles.

Cizek, U.S. Patent No. 3,383,435 discloses polyphenylene ether-styrene resin compositions, including rubber-modified styrene resin-polyphenylene ether resins wherein the rubber component is of the unsaturated type such as polymers and copolymers of butadiene. The styrene resin component improves the moldability of the polyphenylene ethers.

In Cooper et al U.S. Patents 3,943,191, 3,959,211, 3,974,235, 4,101,503, 4,101,504, 4,101,505, 4,102,850 and 4,226,761 there are disclosed various polyphenylene ether resin compositions which include a flame retardant additive.

From U.S. Patent No. 4,144,288 it is known to improve flame retardancy and to obtain smoke suppression by adding sodium tetraboratepentahydrate and a brominated aromatic compound to a styrenic resin and U.S. Patent No. 3,919,356 describes flame retardant polymeric compositions comprising a polymeric base, a flame retarding amount of a special halogenated organic compound and a synergistic additive selected from antimony oxide and zinc borate. The prior filed, but not prior published European patent application 0058378 finally describes self-extinguishing thermoplastic molding materials containing a vinylaromatic polymer, a polyphenylene ether and flame retardant additives and, if necessary, other usual additives.

Description of the invention

It has now been found that polyphenylene ether compositions can be rendered flame resistant without becoming discolored upon molding. This is accomplished by a flame retardant system or additive which includes a combination or admixture of a brominated phenoxy alkane and a boron containing ester which are stable at 250 to 300°C. When an effective amount of this system is incorporated in the polyphenylene ether composition the resultant composition is rendered flame resistant and at the time does not discolor upon molding.

As a preferred example of the brominated phenoxy alkane there can be employed 1,2-bis(tribromophenoxy)ethane and a preferred boron containing ester is tri(2-phenylcyclohexyl)borate.

In preparing the flame retardant system, 1 to 3 parts by weight of the boron containing ester and 10 to 25 parts by weight of the brominated phenoxy alkane are mixed together. To render the polyphenylene ether composition flame resistant from 10 to 25 parts by weight of the total flame retardant system is incorporated per 100 parts of the polyphenylene ether resin composition which can also contain polybutadiene-modified polystyrene. Polyphenylene ethers are also available commercially as a blend with styrene resin. See U.S. Patent No. 3,383,435 and U.S. Patent 3,663,654. These blends comprise between about 25 and 75% of polystyrene units and are available from General Electric Company under the trademark NORYL®. At high temperatures, 400—600°C, at which burning of the polyphenylene ether resin composition occurs, the halogenated compound and the boron containing ester interact to form intermediates which produce char and quickly quench the flame, thus maintaining excellent processing color. Small, but effective amounts of catalyst, such as ferrocene and polyferrocene, which at low level, can be added to enhance flame quenching.

These catalysts can be added in the amounts ranging from 0.5 parts to 3 parts by weight per 100 parts by weight of the polyphenylene ether resin composition.

The polyphenylene ethers contemplated by the subject invention, in a preferred embodiment, have repeated structural units of the formula

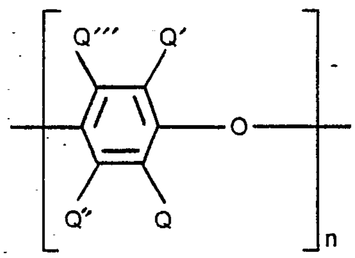

where Q, Q', Q'' and Q''' are independently selected from the group consisting of hydrogen, halogen, hydrocarbon radicals, halohydrocarbon radicals having at least two carbon atoms between the halogen atom and phenyl nucleus, hydrocarbonoxy radicals and halohydrocarbonoxy radicals having at least two carbon atoms between the halogen atom and phenyl nucleus and Q', Q'' and Q''' in addition may be halogen with the proviso that Q and Q' and preferably free of tertiary carbon atom; and n represents the total number of monomer residues and is an integer of at least 50. Examples of polyphenylene ethers corresponding to the above formula can be found in the above-referenced patents of Hay and Stamatoff.

The term polyphenylene ether, as used in this disclosure is intended to include within its scope those polymers represented by the above formula as well as polyphenylene ethers having properties altered by admixture with other resins. In the U.S. Patent No. 3 383 435, there is provided means for simultaneously improving the melt upgrading many properties of polystyrene. The invention of U.S. Patent 3 383 435 is based upon the discovery that the polyphenylene ethers and the polystyrene, including the modified polystyrenes, are combinable in all proportions resulting in blends having many properties improved over those of either of the components. As disclosed in said patent, the polystyrenes combinable with the polyphenylene ether are those having at least 25 percent by weight polymer units derived from a monomer having the formula:

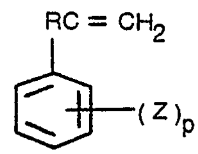

wherein R is hydrogen, (lower) alkyl or halogen; Z is a member selected from ther class consisting of vinyl, hydrogen, halogen and (lower) alkyl; and p is 0 or a whole number equal from 1 to 5. The preferred composition of this patent is a poly(2,6-dialkyl-1,4-phenylene)-ether combined with polystyrene or rubber-modified polystyrenes. "(Lower)" alkyl includes 1—6 carbon atoms.

The process for preparing the flame resistant polyphenylene ether compositions, in general, involves intimately mixing the flame retardant system with the polyphenylene ether composition, then blending the components. Preferably, the polyphenylene ether and the combination of the brominated phenoxy alkane and boron containing ester are first intimately mixed to form a premix, and the premix is passed through a compounder extruder at an elevated temperature of 260°C to 315°C. The extruder blend is pelletized and can then be molded into any desired shape, as, for example, by injection molding, such as, in a Newbury injection molding machine.

The flame resistant compositions of this invention are useful for all purposes for which polyphenylene ethers have hitherto been used, for example, for conversion to films, fibers, molded articles and the like.

The flame retardant system is used advantageously with polyphenylene ethers per se or in compositions thereof with other additives, such as polystyrene and rubber modified polystyrene, and particularly where the processing or application of such compositions requires the use of high temperatures which would result in discoloration and where impact strength might be reduced.

The present kinds of compositions can also contain non-resinous supplementary ingredients heretofore customarily employed in polyphenylene ether molding compositions to improve certain other chemical and physical properties. The non-resinuous supplements include fillers and/or reinforcing agents, such as, mineral fillers (for example, clay, talc, calcium sulfate, etc.), strengthening fibers antioxidants, dyes, pigments, plasticizers, and so forth. These are generally added in minor but effective amounts ranging from 1% to 50% by weight, based on the total composition weight.

Description of the preferred embodiments

The following example illustrates the invention further, and is not to be construed as limiting the invention.

Example

The composition of the flame retardant system and of the blends of the polyphenylene ether with the flame retardant system, and the properties of the flame resistant polyphenylene ether compositions are summarized in the Table below.

In the Table, PPO means poly(2,6-dimethyl-1,4-phenylene)-oxide or ether having an intrinsic viscosity of about 0.5 dl/g measured in chloroform at 30°C and a high impact polybutadiene-modified polystyrene. UL Subject 94 and SE I and SE II refer to the flame resistant tests and Standards of Underwriter's Laboratories Bulletin No. 94, SE being the abbreviation for "self extinguishing" and the Roman numerals indicate the UL ratings.

The PPO and the polystyrene were premixed and then there was mixed therewith the flame retardant system of 1,2-bis(tribromophenoxy)ethane and tri(2-phenylcyclohexyl)-borate. The blend was compounded and extruded in a compounder extruder at a temperature of 232°C. The extruded pellets were molded at a temperature of 288°C into standard test pieces in an injection molding machine.

Example A is a comparison example wherein only the well known flame retardant hexabromobiphenyl is employed.

TABLE

| Examples | A | Example According to Invention |
|---|---|---|
| PPO® | 35 | 25 |
| High Impact Polystyrene | 65 | 75 |
| Hexabromobiphenyl | 15.2 | — |
| Tri(2-phenylcyclohexyl)-borate | 0.0 | 3.0 |
| 1,2-Bis(tribromophenoxy)-ethane | — | 15.2 |
| Ferrocene | — | 0.7 |
| Properties | | |
| UL Subject 94(1/16")seconds<br>3,2 mm | FAILS<br>Burns | SE I |
| Heat Distortion (°F/264 psi)<br>2" Span. °C/18,5 kg/cm$^2$ | 212—215<br>100—101.5 | 195<br>90.5 |
| Color | — | natural, very light |
| Izod Impact (ft.lb./in.notch)<br>cm kg/cm | 3.2<br>17.41 | 2.8<br>15.24 |
| Tensile Yield | — | 6 600 |
| Tensile Ult | — | 6 100 |
| Elongation % | — | 53 |

It will be evident from the above that the flame retardant system according to this invention is highly effective in rendering polyphenylene ether compositions flame resistant, and the polyphenylene ether compositions rendered flame resistant thereby are non-discolored. At the same time other properties of the flame resistant compositions are not adversely affected by the flame retardant system and in some cases improved, such as impact strength. Obviously other modifications and variations of the present invention are possible in light of the above teachings. For instance, instead of poly(2,6-dimethyl-1,4-phenyl)ether, a copolymer such as poly(2,6-dimethyl-*co*-2,3,6-trimethyl-1,4-phenylene)ether can be substituted. Also, the composition may contain fillers and/or reinforcing agents. It is, therefore, to be understood that changes may be made in the embodiments of the invention described which are within the full intended scope of the invention as defined by the appended claims.

**Claims**

1. A flame retardant composition, comprising a polyphenylene ether resin and 10 to 25 parts per 100 parts of the composition of a flame retardant system consisting of a combination of 1 to 3 parts of a boron containing ester and 10 to 25 parts of a brominated phenoxy alkane, which is stable at 250 to 300°C.

2. A composition as defined in claim 1, wherein the polyphenylene ether is of the formula

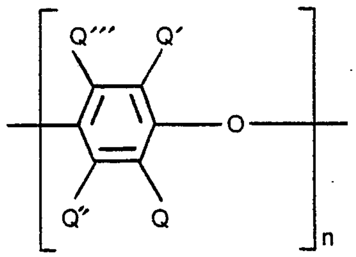

where Q, Q', Q'' and Q''' are independently selected from the group consisting of hydrogen, halogen, hydrocarbon radicals, halohydrocarbon radicals having at least two carbon atoms between the halogen atom and the phenyl nucleus, hydrocarbonoxy radicals and halohydrocarbonoxy radicals having at least two carbon atoms between the halogen atom and the phenyl nucleus, and Q', Q'' and Q''' in addition may be halogen with the proviso that Q and Q' are preferably free of a tertiary carbon atom; and n represents the total number of monomer residues and is an integer of at least 50.

3. A composition as defined in claim 2, wherein the polyphenylene ether component is a poly(2,6-dialkyl-2,4-phenylene)ether.

4. A composition as defined in claim 3, wherein the polyphenylene ether component is a poly(2,6-dimethyl-1,4-phenylene)ether.

5. A composition as defined in claim 1, wherein said combination comprises 1,2-bis(tribromophenoxy)-ethane and tri(2-phenylcyclohexyl)borate.

6. A composition as defined in any preceding claim, wherein the polyphenylene ether resin is a blend with a polystyrene.

7. A composition as defined in any preceding claim, which includes an amount of a ferrocene effective to enhance flame quenching.

8. A composition as defined in any preceding claim, which includes a filler and/or reinforcement.

9. A molded article obtained by molding the composition defined in any of the preceding claims.

**Patentansprüche**

1. Flammhemmende Zusammensetzung enthaltend ein Polyphenylenätherharz und 10 bus 25 Teile pro 100 Teile der Zusammensetzung eines flammhemmenden Systems bestehend aus einer Kombination von 1 bis 3 Teilen eines borhaltigen Esters und 10 bis 25 Teilen eines bromierten Phenoxyalkans, welche bei 250 bis 300°C stabil ist.

2. Zusammensetzung nach Anspruch 1, worin der Polyphenylenäther der Formel

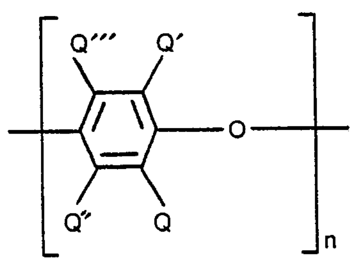

entspricht, worin Q, Q', Q'' und Q''' unabhängig voneinander ausgewählt sind aus der Gruppe bestehend aus Wasserstoff, Halogen, Kohlenwasserstoffresten, Halogenkohlenwasserstoffresten mit wenigstens 2 Kohlenstoffatomen zwischen dem Halogenatom und dem Phenylkern, Kohlenwasserstoffoxyresten und Halogenkohlenwasserstoffoxyresten mit wenigstens 2 Kohlenstoffatomen zwischen dem Halogenatom und dem Phenylkern, und Q', Q'' und Q''' zusätzlich Halogen sein können mit der Maßgabe, daß Q und Q' vorzugsweise frei von einem tertiären Kohlenstoffatom sind; und n die gesamte Zahl der Monomerenreste wiedergibt und eine ganze Zahl von wenigstens 50 ist.

3. Zusammensetzung nach Anspruch 2, worin der Polyphenylenätherbestandteil ein Poly(2,6-dialkyl-2,4-phenylen)-äther ist.

4. Zusammensetzung nach Anspruch 3, worin der Polyphenylenätherbestandteil Poly(2,6-dimethyl-1,4-phenylen)-äther ist.

5. Zusammensetzung nach Anspruch 1, worin die Kombination 1,2-bis(tribromphenoxy)-äthan und Tri(2-phenylcyclohexyl)-borat umfaßt.

6. Zusammensetzung nach einem der vorhergehenden Ansprüche, worin das Polypheylenätherharz eine Mischung mit einem Polystyrol ist.

7. Zusammenstezung nach einem der vorhergehenden Ansprüche, die eine Menge eines Ferrocens umfaßt, welche wirksam ist, um die flammhemmende Wirkung zu vergrößern.

8. Zusammensetzung nach einem der vorhergehenden Ansprüche, die einem Füllstoff und/oder ein Verstärkungsmittel umfaßt.

9. Ausgeformter Gegenstand, der durch Ausformen der Zusammensetzung erhalten worden ist, wie sie in einem der vorstehenden Ansprüche definiert ist.

**Revendications**

1. Une composition retardatrice dem flamme comprenant une résine de poly(éther de phénylene) et de 10 à 25 parties pour 100 parties de la composition d'un système retardateur de flamme consistant en une combinaison de l à 3 parties d'un ester contenant du bore et de 10 à 25 parties d'un phénoxyalcane bromé, qui est stable entre 250 et 300°C.

2. Une composition comme défini dans la revendication 1, dans laquelle le poly(éther de phénylène) a pour formule

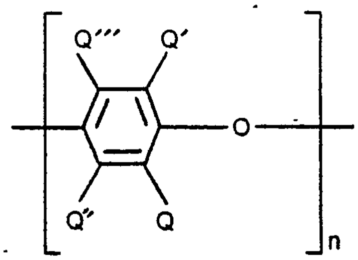

dans laquelle Q, Q', Q'' et Q''' sont indépendamment choisis dans le groupe constitué par un hydrogène, un halogène, les radicaux hydrocarbonés, les radicaux halogénohydrocarbonés ayant au moins deux atomes de carbone entre l'atome d'halogène et le noyau phényle, les radicaux hydrocarbonoxy et les radicaux halogénohydrocarbonoxy ayant au moins deux atomes de carbone entre l'atome d'halogène et le noyau phényle et Q', Q'' et Q''' de plus peuvent être un halogène sous réserve qui Q et Q' sont de préférence dépourvus d'atome de carbone tertiare; et n représente le nombre total des restes monomères et est un entier d'au moins 50.

3. Une composition comme défini dans la revendication 2, dans laquelle le poly(éther de phénylène) constitutif est un poly(éther de 2,6-dialkyl-1,4-phénylène).

4. Une composition comme défini dans la revendication 3 dans laquelle le poly(éther de phénylène) constitutif est un poly(éther de 2,6-diméthyl-1,4-phénylène).

5. Une composition comme défini dans la revendication 1, dans laquelle ladite combination comprend du 1,2-bis(tribromophénoxy)éthane et du borate de tri(2-phénylcyclohexyle).

6. Une composition comme défini dans l'une quelconque des revendications précédentes, dans laquelle la résine de poly(éther de phénylène) est un mélange avec un polystyrène.

7. Une composition comme défini dans l'une quelconque des revendications précédentes, qui comprend une quantité d'un ferrocène efficace pour accroître l'extinction des flammes.

8. Une composition comme défini dans l'une quelconque des revendications précédentes qui comprend une charge et/ou un renfort.

9. Un article moulé obtenu par moulage de la composition définie dans l'une quelconque des revendications précédentes.